# EUROPÄISCHE PATENTANMELDUNG

(11) **EP 4 226 824 A1**
(43) Veröffentlichungstag der Anmeldung: **16.08.2023**
(21) Anmeldenummer: 22156594.8
(22) Anmeldetag: 14.02.2022
(51) Int. Cl.: A47L 5/24, A47L 9/28

(54) **SAUGGERÄT SOWIE VERFAHREN ZUM BETRIEB EINES SAUGGERÄTES**

(71) Anmelder: Vorwerk & Co. Interholding GmbH, 42270 Wuppertal (DE)
(72) Erfinder: MOSQUERA MICHAELSEN, Pablo, 45473 Mülheim (DE); SPITTHÖVER, Christoph, 42109 Wuppertal (DE); BÄRHAUSEN, Jan, 50739 Köln (DE)
(74) Vertreter: Dr. Solf & Zapf Patent- und Rechtsanwalts PartG mbB

(57) **Zusammenfassung**

Die vorliegende Erfindung betrifft ein Sauggerät (1) mit mindestens einem Gebläse (2) mit einem Motor, mindestens einem Temperatursensor (3) und mindestens einer Steuereinrichtung (4). Ferner betrifft die Erfindung ein Verfahren zum Betrieb eines Sauggerätes sowie ein Computerprogrammprodukt.

Ein Sauggerät (1) sowie ein Verfahren (100) zum Betrieb eines Sauggerätes (1) und ein Computerprogrammprodukt, die eine Überhitzung von Komponenten innerhalb eines Sauggerätes (1) verhindern und gleichzeitig eine Energieeffizienz gewährleisten, werden realisiert, indem die Steuereinrichtung (4) derart ausgebildet und eingerichtet ist, mindestens einen Betriebsparameter des Motors in Abhängigkeit von einem Abgleich eines Temperaturmesswertes des Temperatursensors (3) mit mindestens einem Temperaturschwellenwert zumindest zeitweise zu drosseln oder zu steigern.

## Beschreibung

Die Erfindung betrifft ein Sauggerät mit mindestens einem Gebläse mit einem Motor, mindestens einem Temperatursensor und mindestens einer Steuereinrichtung. Ferner betrifft die Erfindung ein Verfahren zum Betrieb eines Sauggerätes sowie ein Computerprogrammprodukt.

Sauggeräte und Verfahren zum Betrieb eines Sauggerätes sind im Stand der Technik in einer Vielzahl von Ausgestaltungen bekannt. Bei gattungsgemäßen Sauggeräten handelt es sich beispielsweise um Staubsauger, Handstaubsauger, Saugroboter oder Saug-Wisch-Roboter. Bei Sauggeräten kann ein Betrieb bei hoher Umgebungstemperatur oder eine Drosselung des Saugluftstroms, beispielsweise bei der Verwendung auf langflorigen Teppichen, zu einer Verringerung der Kühlung des Motors führen, infolgedessen es zu einer Erwärmung von Motorkomponenten wie zum Beispiel Motorlagern oder auch einzelnen Komponenten in der Nähe des Motors, beispielsweise elektronischen Bauteilen, kommt. Insbesondere um eine Überhitzung von Motorlagern oder elektronischen Bauteilen zu verhindern, ist es im Stand der Technik bekannt, Nebenluftventile vorzusehen, die die Ansaugung von zusätzlicher Umgebungsluft freigeben. Ferner ist es aus dem Stand der Technik bekannt, dass eine Steuereinheit bei zu starker Erwärmung innerhalb des Gehäuses ein Ausschalten des Sauggerätes bewirkt.

Die aus dem Stand der Technik bekannten Lösungen gehen aber insbesondere bei batteriebetriebenen Sauggeräten zu Lasten der Akkulaufzeit, da nicht nutzbare Luftbewegungen erzeugt werden.

Der Erfindung liegt daher die Aufgabe zu Grunde, ein Sauggerät sowie ein Verfahren zum Betrieb eines Sauggerätes und ein Computerprogrammprodukt anzugeben, die eine Überhitzung von Komponenten innerhalb eines Sauggerätes verhindern und gleichzeitig eine Energieeffizienz gewährleisten.

Die vorgenannte Aufgabe ist bei einem gattungsgemäßen Sauggerät gemäß dem Kennzeichnungsteil des Patentanspruchs 1 dadurch gelöst, dass die Steuereinrichtung derart ausgebildet und eingerichtet ist, mindestens einen Betriebsparameter des Motors in Abhängigkeit von einem Abgleich eines Temperaturmesswertes des Temperatursensors mit mindestens einem Temperaturschwellenwert zumindest zeitweise zu drosseln oder zu steigern. Die Steuereinrichtung weist vorzugsweise Mittel auf, um das Abgleichen sowie das Drosseln oder Steigern wie beschrieben auszuführen.

Bei dem Sauggerät handelt es sich vorzugsweise um ein Reinigungsgerät, bei dem eine Reinigungsfunktion zumindest teilweise unter Verwendung eines Saugluftstroms durchgeführt wird, beispielsweise einen Staubsauger, einen Handstaubsauger, einen Saugroboter oder einen Saug-Wisch-Roboter. Das Sauggerät weist mindestens ein Gebläse mit einem Motor auf, wobei vorteilhaft mit dem Gebläse mindestens ein Saugluftstrom in einem Saugkanal des Sauggerätes erzeugbar ist.

Das Sauggerät weist ferner insbesondere mindestens eine Filtereinheit auf, die derart angeordnet ist, dass sie im Betrieb von dem Saugluftstrom durchströmt wird, um Sauggut aus dem Saugluftstrom zu entfernen. Die Filtereinheit weist beispielsweise einen Filterbeutel aus einem Filtervlies, einen reinigbaren Mehrfachfilter oder einen Filterzyklon auf. Die Filtereinheit weist jedenfalls eine Abscheideeinrichtung auf, die dazu geeignet ist, Sauggut aus dem Saugluftstrom abzureinigen.

Der mindestens eine, insbesondere genau eine, Temperatursensor ist vorzugsweise innerhalb eines Gehäuses des Sauggerätes angeordnet. Der Temperatursensor weist vorzugsweise einen NTC-Widerstand auf. Beispielsweise ist der Temperatursensor derart angeordnet, dass die Temperatur des Saugluftstromes nach dem Austritt aus dem Gebläse, vorzugsweise mindestens einer diesem Saugluftstrom ausgesetzten elektrischen Komponente, beispielsweise einer Platine oder der Steuereinrichtung, insbesondere einer die Steuereinrichtung aufweisenden Platine, erfassbar ist. Die Steuereinrichtung umfasst vorteilhaft mindestens eine Datenverarbeitungseinrichtung mit mindestens einem Prozessor und mindestens einem Speichermittel zum Speichern von Daten. Bevorzugt ist der Temperatursensor auf mindestens einer Platine, insbesondere einer Platine mit der Steuereinrichtung, angeordnet. Vorteilhaft ist der Temperatursensor auf einer Hauptplatine des Sauggerätes angeordnet. Alternativ oder zusätzlich ist vorgesehen, dass mindestens ein Temperatursensor derart angeordnet ist, dass eine Temperatur mindestens eines Motorlagers, zumindest indirekt, erfassbar ist.

Das Gebläse, vorzugsweise der Motor des Gebläses, ist mit insbesondere vom Benutzer einstellbaren Betriebsparametern betreibbar. Betriebsparameter des Motors sind beispielsweise Drehzahl, Leistung und/oder Drehmoment. Der Benutzer wählt dazu üblicherweise eine gewünschte Saugleistungsstufe über einen Schalter oder ein Bedienmenü. Ferner ist vorgesehen, dass die vom Benutzer gewünschte Saugleistung stufenlos, beispielsweise mit einem Schieberegler, einstellbar ist. Auf Basis der Wahl des Benutzers wird der Motor derart angesteuert, dass er mit zu der Saugleistungsstufe zugeordneten Betriebsparametern, beispielsweise einer bestimmten Drehzahl, bestimmten Leistung und/oder einem bestimmten Drehmoment, betrieben wird. In der vorliegenden Beschreibung sind für das Sauggerät beschriebene Verfahrensschritte vorzugsweise so zu verstehen, dass die Steuereinrichtung derart ausgebildet und eingerichtet ist, dass diese Verfahrensschritte von der Steuereinheit veranlasst werden.

Die Hauptwärmequelle für die elektronischen Komponenten in dem Gehäuse eines Sauggerätes bildet das Gebläse mit dem Motor. Um insbesondere eine Überhitzung des Motors und/oder der Motorlager und/oder von elektronischen Komponenten im Betrieb des Sauggerätes zu verhindern, ist die Steuereinrichtung derart ausgebildet und eingerichtet, in Abhängigkeit von einem Abgleich mindestens eines Temperaturmesswertes des Temperatursensors mit mindestens einem Temperaturschwellenwert mindestens einen Betriebsparameter des Motors, z. B. die Drehzahl, die Leistung und/oder das Drehmoment, zumindest zeitweise zu drosseln oder zu steigern. Mit dem Temperatursensor wird zu einem vorbestimmten Zeitpunkt, in vorbestimmten Zeitabständen und/oder kontinuierlich mindestens ein Temperaturmesswert ermittelt und insbesondere an die Steuereinrichtung übermittelt oder von dieser erfasst. Der Temperaturmesswert wird mit mindestens einem vordefinierten Temperaturschwellenwert abgeglichen.

In Abhängigkeit von dem Ergebnis des Abgleichs, beispielsweise Unterschreiten, Erreichen oder Überschreiten, wird mindestens ein Betriebsparameter des Motors zumindest zeitweise gedrosselt oder gesteigert. "Zumindest zeitweise" bedeutet insbesondere, dass mindestens ein Betriebsparameter so lange gedrosselt oder gesteigert bleibt, bis das Ergebnis des Abgleichs ein anderes Ergebnis in Bezug auf den Temperaturschwellenwert oder einen anderen Temperaturschwellenwert liefert. Es ist auch vorgesehen, dass das Drosseln oder Steigern nach dem Abgleich für einen vorbestimmten Zeitraum erfolgt. Nach Ablauf des Zeitraums erfolgt eine weitere Messung eines Temperaturmesswertes und in Abhängigkeit von dem Ergebnis beispielsweise ein Aufrechterhalten der Drosselung, eine zusätzliche Drosselung oder ein Steigern des Betriebsparameters auf den Ausgangswert vor der Drosselung.

Überschreitet der gemessene Temperaturmesswert beispielsweise den Temperaturschwellenwert, wird mindestens ein Betriebsparameter des Motors gedrosselt, beispielsweise so lange gedrosselt, bis der Temperaturmesswert den Temperaturschwellenwert unterschreitet oder erreicht. Unterschreitet der Temperaturmesswert einen vorbestimmten Temperaturschwellenwert, kann mindestens ein Betriebsparameter des Motors gesteigert werden, insbesondere bis zu einem von dem Benutzer durch die Wahl der Saugleistungsstufe oder durch die Bauart des Motors festgelegten Maximalwert des Betriebsparameters gesteigert werden.

Besonders bevorzugt ist vorgesehen, dass in Abhängigkeit von dem mindestens einen Temperaturmesswert des Temperatursensors die Motordrehzahl gedrosselt oder gesteigert wird. Es ist ferner insbesondere vorgesehen, dass eine Mehrzahl von Betriebsparametern oder eine Kombination von Betriebsparametern gedrosselt oder gesteigert werden, beispielsweise die Drehzahl und die Leistung des Motors. Die Steuereinheit ist ferner derart ausgebildet und eingerichtet, dass das Messen des Temperaturmesswertes und das Abgleichen im Wesentlichen kontinuierlich, regelmäßig, in bestimmten Zeitintervallen, ereignisgesteuert, z. B. beim Einschalten, und/oder für bestimmte Zeiträume durchgeführt wird.

Gemäß der vorliegenden Erfindung ist folglich vorgesehen, mindestens einen Betriebsparameter des Motors in Abhängigkeit von der aktuellen Temperatur der elektronischen Komponenten, insbesondere einer Platine mit der Steuereinheit, zumindest zeitweise zu verändern, nämlich zu drosseln oder zu steigern. Dadurch wird/werden der Motor und/oder ein Motorlager und/oder elektronische Komponenten, beispielsweise eine Platine mit der Steuereinheit, vor Überhitzung geschützt.

Der Erfindung liegt zudem die Erkenntnis zugrunde, dass für den Überhitzungsschutz eines Sauggerätes grundsätzlich die Temperatur an zwei Stellen im Gehäuse maßgeblich ist, nämlich die Temperatur eines Motorlagers und die Temperatur einer Platine, vorzugsweise einer Steuerplatine, insbesondere auf einer dem Motor zugewandten Seite der Platine. Experimentell konnte bei bekannter Anordnung der Platine und des Motorlagers eine Korrelation zwischen der Temperatur auf der Platine und der Temperatur des Motorlagers festgestellt werden, so dass für einen Schutz vor Überhitzung vorzugsweise allein eine Regelung auf Basis der Temperatur an der Platine ausreichend ist. Gemäß der Erfindung wird folglich mindestens ein reduzierter, nämlich gedrosselter, maximaler Betriebsparameter in Abhängigkeit von der aktuellen Temperatur am Temperatursensor, vorzugsweise also der Temperatur der in der Nähe des Temperatursensors befindlichen elektronischen Komponenten, festgelegt. Die Steuereinheit erlaubt also stetig die höchstmögliche Saugleistung, die zu dem aktuellen Temperaturmesswert passt - begrenzt durch die vom Benutzer gewählte Saugleistungsstufe, wobei ein Schutz vor Überhitzung des Motors und/oder der Motorlager und/oder von elektronischen Komponenten gewährleistet wird. Trotz Erwärmung wird ein jedenfalls gedrosselter Betrieb des Sauggerätes ermöglicht.

Gegenüber der Verwendung eines Nebenluftventils hat die vorliegende Erfindung den Vorteil, dass der Bauraum sowie die Fertigungstoleranzen reduziert sind und die Antriebsenergie effizient eingesetzt wird. Gegenüber einer temperaturgesteuerten Ausschaltung des Sauggerätes hat die vorliegende Erfindung den Vorteil, dass weiterhin der Betrieb mit einem gedrosselten Betriebsparameter, beispielsweise einer gedrosselten Motordrehzahl, möglich ist, bis sich die vor Überhitzung zu schützenden Komponenten abgekühlt haben. Für den Benutzer ist eine Drosselung nicht oder nur sehr geringfügig wahrnehmbar. Gleichermaßen kann mindestens ein Betriebsparameter, insbesondere der gedrosselte Betriebsparameter, beispielsweise die Motordrehzahl, gesteigert werden, wenn die gemessene Temperatur wieder unter den Temperaturschwellenwert fällt.

Gemäß einer Ausgestaltung des Sauggerätes hat es sich als vorteilhaft herausgestellt, wenn vorgesehen ist, dass das Drosseln oder Steigern des mindestens einen Betriebsparameters stufenweise oder stufenlos erfolgt. Es ist insbesondere vorgesehen, dass das Drosseln oder Steigern des Betriebsparameters, beispielsweise der Drehzahl des Motors, um einen festen Betrag erfolgt. Gleichermaßen ist insbesondere vorgesehen, dass das Steigern des Betriebsparameters um einen festen Betrag erfolgt. Es ist zudem vorgesehen, dass die Steuereinrichtung derart ausgebildet und eingerichtet ist, dass bei Überschreiten des Temperaturschwellenwertes der Betriebsparameter, insbesondere die Drehzahl, um einen festen Betrag gesenkt wird. Bei erneutem Überschreiten nach einer vordefinierten Zeitspanne wird der Betriebsparameter vorzugsweise erneut um einen festen Betrag abgesenkt. Dadurch kann eine effektive Abkühlung der elektronischen Komponenten erreicht werden. Sobald durch die Drosselung eine Reduzierung der Temperatur am Temperatursensor erreicht worden ist, kann der Betriebsparameter wieder gesteigert werden, beispielsweise stufenweise oder stufenlos. Ferner ist vorzugsweise vorgesehen, dass sowohl das Drosseln als auch das Steigern des Betriebsparameters stufenlos erfolgen.

In diesem Zusammenhang hat sich gemäß einer weiteren Ausgestaltung des Sauggerätes als vorteilhaft herausgestellt, wenn vorgesehen ist, dass ein Grad der Abweichung des mindestens einen Temperaturmesswertes von mindestens einem Temperaturschwellenwert bestimmt wird, und dass unter Verwendung des Grades der Abweichung ein Grad des Drosselns oder ein Grad des Steigerns bestimmt, insbesondere berechnet, und angewendet wird. Wenn beispielsweise der Temperaturschwellenwert um 10% über- oder unterschritten wird, wird beispielsweise auch der Betriebsparameter, insbesondere beispielsweise die Drehzahl, um 10 % gedrosselt oder gesteigert. Es ist vorgesehen, dass das Verhältnis zwischen dem Grad der Abweichung von dem Temperaturschwellenwert und dem Grad des Drosselns oder Grad des Steigerns proportional ist. Es sind aber auch von der Proportionalität abweichende Verhältnisse vorgesehen.

Gemäß einer weiteren Ausgestaltung des Sauggerätes ist vorgesehen, dass eine erfolgte Drosselung oder Steigerung eines Betriebsparameters so lange gehalten wird, bis mindestens ein Temperaturschwellenwert erreicht, unter- oder überschritten wird. Beispielsweise wird eine Drosselung eines Betriebsparameters, vorzugsweise der Drehzahl, so lange gehalten, bis die Temperatur den Temperaturschwellenwert, der ursprünglich die Drosselung ausgelöst hat, wieder erreicht oder unterschritten hat. Eine Drosselung wird folglich dann rückgängig gemacht, wenn die Temperatur wieder unter mindestens einen Temperaturschwellenwert fällt oder diesen erreicht.

Eine weitere Ausgestaltung des Sauggerätes sieht vor, dass eine Mehrzahl von Temperaturschwellenwertbereichen definiert sind und dass jedem Temperaturschwellenwertbereich mindestens ein, insbesondere maximaler, Betriebsparameter zugeordnet ist. Vorzugsweise sind zwischen sieben und neun, insbesondere genau acht, Temperaturschwellenwertbereiche vorgesehen. Vorteilhaft ist der den unterschiedlichen Temperaturschwellenwertbereichen zugeordnete Betriebsparameter bzw. sind die Betriebsparameter ebenfalls unterschiedlich zueinander. Ein Temperaturmesswert des Temperatursensors wird mit den Temperaturschwellenwertbereichen, insbesondere zu einem bestimmten Zeitpunkt, abgeglichen und einem Temperaturschwellenwertbereich zugeordnet. Vorteilhaft wird der Temperaturmesswert mit jedem der Temperaturschwellenwertbereiche abgeglichen, bevor eine Zuordnung erfolgt.

Nachfolgend wird der dem ausgewählten Temperaturschwellenwertbereich zugeordnete Betriebsparameter als maximaler Betriebsparameter für den Betrieb festgelegt bzw. steuert die Steuereinrichtung des Motors derart an, dass ein Betrieb mit diesem maximal zulässigen Betriebsparameter erfolgt. Die Temperaturschwellenwertbereiche werden vorzugsweise in einem Speichermittel der Steuereinrichtung bereitgehalten bzw. können von der Steuereinrichtung für die durchzuführenden Schritte aus diesem abgerufen werden.

Erfindungsgemäß ist vorgesehen, dass beim Drosseln oder Steigern auch ein oder mehrere Temperaturschwellenwertbereiche übersprungen werden können, um den maximal zulässigen Betriebsparameter festzulegen. Steigt beispielsweise die Temperatur am Temperatursensor sprunghaft, kann beispielsweise der maximal zulässige Betriebsparameter deutlich unter dem aktuellen Betriebsparameter liegen. Gleiches gilt für den Fall, dass die Temperatur am Temperatursensor sprunghaft abfällt. In diesem Fall kann ein höherer Betriebsparameter, beispielsweise eine höhere Drehzahl, als zulässiger maximaler Betriebsparameter festgelegt werden, so dass das Gerät wieder mit gesteigerter Saugleistung betrieben werden kann.

Dieses Ausführungsbeispiel hat gegenüber dem Stand der Technik den Vorteil, dass im Vergleich zum sukzessiven Durchlaufen von Betriebsparametern in Stufen wesentlich schneller die maximal thermisch zulässige Betriebsparameterstufe, beispielsweise Drehzahlstufe, erreichbar ist.

Die nachfolgende Tabelle zeigt beispielhaft die Temperaturschwellenwertbereiche, in denen ein Drosseln der Drehzahl als Betriebsparameter erfolgt, wenn der Temperaturmesswert einem Temperaturschwellenwertbereich zugeordnet werden kann, und solche Temperaturschwellenwertbereiche, in denen ein Steigern der Drehzahl erfolgen kann.

| **Motordrehzahl [Umdrehungen/Minute]** | **Temperaturschwellenwertbereich zum Drosseln** | **Temperaturschwellenwertbereich zum Steigern** |
|---|---|---|
| 95.000 | ≤ 75°C | ≤ 74°C |
| 80.000 | > 75°C ... ≤ 76°C | > 74°C ... ≤ 75°C |
| 76.000 | > 76°C ... ≤ 77°C | > 75°C ... ≤ 76°C |
| 70.000 | > 77°C ... ≤ 78°C | > 76°C ... ≤ 77°C |
| 63.000 | > 78°C ... ≤ 79°C | > 77°C ... ≤ 78°C |
| 58.000 | > 79°C ... ≤ 80°C | > 78°C ... ≤ 79°C |
| 47.000 | > 80°C ... ≤ 81°C | > 79°C ... ≤ 80°C |
| 30.000 | > 81°C ... ≤ 82°C | - |
| 0 (aus) | > 82°C | - |

Insbesondere um eine unvermeidbare Beschädigung des Sauggerätes zu verhindern, ist gemäß einer weiteren Ausgestaltung vorgesehen, dass bei Überschreiten eines maximalen Temperaturschwellenwertes ein Abschalten des Motors bewirkt wird. Kann trotz der Drosselung eines Betriebsparameters, beispielsweise der Drehzahl, keine ausreichende Reduzierung der Temperatur am Temperatursensor erreicht werden, muss bei Überschreiten einer maximalen Temperatur am Temperatursensor gleichwohl eine Abschaltung des Sauggerätes erfolgen. Diese Notabschaltung wird vorteilhaft von der Steuereinrichtung bewirkt. Der maximale Temperaturschwellenwert wird beispielsweise aus dem Minimum der maximal zulässigen Temperatur der elektronischen Komponenten, beispielsweise einer Platine, und der maximal zulässigen Temperatur des Motorlagers - unter Berücksichtigung der empirisch ermittelten Korrelation - definiert.

Gemäß einer weiteren Ausgestaltung des Sauggerätes ist vorgesehen, dass mindestens ein zweiter Temperatursensor vorhanden ist, und dass das Drosseln oder Steigern in Abhängigkeit von dem im Vergleich höheren Temperaturmesswert der beiden Temperatursensoren erfolgt. Vorzugsweise ist mindestens ein Temperatursensor an einer Platine und mindestens ein Temperatursensor am Motorlager angeordnet. Das Drosseln oder Steigern erfolgt dann in Abhängigkeit von dem jeweils höheren Temperaturmesswert. Es ist auch vorgesehen, dass für den ersten Temperatursensor und den zweiten Temperatursensor unterschiedliche Temperaturschwellenwerte oder Temperaturschwellenwertbereiche festgelegt sind, so dass ein Drosseln oder Steigern jeweils nur dann erfolgt, wenn die Temperaturmesswerte beider Temperatursensoren die entsprechenden Kriterien dazu erfüllen, bzw. dass ein Drosseln stets dann erfolgt, wenn mindestens ein Temperatursensor die kritischen Temperaturwerte überschreitet.

Um vorteilhaft eine Beschädigung des Sauggerätes bei sehr hohen Umgebungstemperaturen oder bereits sehr hohen Gerätetemperaturen zu verhindern, ist gemäß einer weiteren Ausgestaltung vorgesehen, dass bei jedem Einschalten des Sauggerätes mindestens ein Temperaturmesswert ermittelt wird, und dass, falls erforderlich, unmittelbar nach dem Einschalten ein Drosseln oder Steigern erfolgt, wenn der Abgleich des Temperaturmesswertes mit mindestens einem Temperaturschwellenwert oder einem Temperaturschwellenwertbereich ein entsprechendes Erfordernis bzw. eine entsprechende Freigabe ergeben hat.

Die Erfindung betrifft ferner ein Verfahren mit Verfahrensschritten, die für die vorstehenden Ausführungsbeispiele des Sauggerätes beschrieben worden sind.

Die eingangs genannte Aufgabe ist ferner gelöst mit einem Verfahren zum Betrieb eines Sauggerätes mit mindestens einem Gebläse mit einem Motor, mindestens einem Temperatursensor und mindestens einer Steuereinrichtung. Vorzugsweise handelt es sich um ein Sauggerät gemäß einem der vorstehend beschriebenen Ausführungsbeispiele. Das Verfahren umfasst zumindest die folgenden Verfahrensschritte:
- Messen mindestens eines Temperaturmesswertes mit dem Temperatursensor,
- Abgleich des gemessenen Temperaturmesswertes mit mindestens einem Temperaturschwellenwert,
- Drosseln oder Steigern mindestens eines Betriebsparameters des Motors in Abhängigkeit von dem Ergebnis des Abgleichs.

Das Messen mindestens eines Temperaturmesswertes mit dem Temperatursensor erfolgt kontinuierlich, in vorbestimmten Zeitintervallen oder zu vorgegebenen Zeitpunkten. Der Temperaturmesswert, vorzugsweise jeder Temperaturmesswert, wird im Rahmen eines Abgleichens mit mindestens einem Temperaturschwellenwert verglichen. In Abhängigkeit von dem Ergebnis des Abgleichs, beispielsweise Übereinstimmung, Überschreitung oder Unterschreitung, erfolgt ein Drosseln oder Steigern mindestens eines Betriebsparameters des Motors, beispielsweise der Drehzahl, der Leistung oder des Drehmoments, insbesondere wie in den vorstehenden Ausführungsbeispielen für das Sauggerät beschrieben.

Gemäß einer ersten Ausgestaltung des Verfahrens ist vorgesehen, dass ein Abgleichen mit einer Vielzahl von, insbesondere in einem Speichermittel bereitgehaltenen, Temperaturschwellenwerten erfolgt, und dass jedem Temperaturschwellenwert mindestens ein, insbesondere maximaler, Betriebsparameter zugeordnet ist. Der auf Basis des Abgleichs ermittelte Betriebsparameter wird nachfolgend vorzugsweise als maximaler Betriebsparameter für den Betrieb festgelegt bzw. der Betrieb des Sauggerätes erfolgt auf Basis dieses Betriebsparameters.

Eine weitere Ausgestaltung des Verfahrens sieht vor, dass das Drosseln oder Steigern, wie für das Ausführungsbeispiel des Sauggerätes vorstehend beschrieben, stufenweise oder stufenlos erfolgt. Es ist auch vorgesehen, dass ein Abgleichen mit Temperaturschwellenwertbereichen erfolgt, wie vorstehend im Rahmen der Ausführungsbeispiele des Sauggeräts beschrieben worden ist.

Ein weiteres Ausführungsbeispiel betrifft ein Verfahren, bei dem das Messen eines Temperaturmesswerts zumindest unmittelbar nach dem Einschalten des Sauggerätes erfolgt, so dass der Betrieb erforderlichenfalls - in Abhängigkeit von dem Ergebnis des Abgleichens - mit mindestens einem gedrosseltem oder gesteigerten Betriebsparameter erfolgt.

Die Erfindung betrifft ferner ein Sauggerät, insbesondere mit einer Steuereinrichtung, das zur Durchführung eines Verfahrens gemäß der vorstehend beschriebenen Ausführungsbeispiele ausgebildet und eingerichtet ist.

Die eingangs genannte Aufgabe ist ferner gelöst durch ein Computerprogrammprodukt, das Anweisungen enthält, um die Steuereinrichtung des Sauggerätes zu veranlassen, ein Verfahren nach einem der vorstehend beschriebenen Ausführungsbeispiele auszuführen.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Sauggerätes in zumindest teilweise geschnittener Ansicht,
- Fig. 2: ein Ausführungsbeispiel eines Sauggerätes in zumindest teilweise geschnittener Ansicht, und
- Fig. 3: ein Ausführungsbeispiel eines schematischen Ablaufs eines erfindungsgemäßen Verfahrens.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

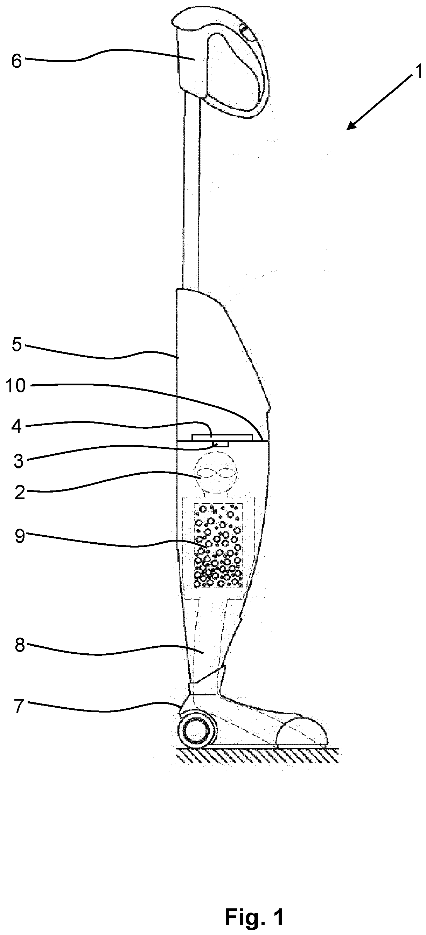

Fig. 1 zeigt ein Ausführungsbeispiel eines Sauggerätes 1 mit mindestens einem Gebläse 2 mit einem Motor, mindestens einem Temperatursensor 3 und einer Steuereinrichtung 4. Das Sauggerät 1 weist ein Gehäuse 5 auf, in dem die wesentlichen Bauelemente des Sauggerätes 1 angeordnet sind. An dem Gehäuse 5 ist ein Handgriff 6 angeordnet, mit dem das Sauggerät 1 von einem Benutzer geführt und bedient werden kann. Das Gebläse 2 mit dem Motor ist innerhalb des Gehäuses 5 derart angeordnet, dass ausgehend von einem Vorsatzgerät 7, das hier als Bodendüse ausgebildet ist, in einem Saugkanal 8 ein Saugluftstrom erzeugbar ist.

Der Saugluftstrom wird von einer Filtereinheit 9 von Sauggut befreit. Die Steuereinrichtung 4 ist zusammen mit dem Temperatursensor 3 auf einer Platine 10 angeordnet. Der Temperatursensor 3 ist insbesondere auf einer in Richtung des Gebläses 2 orientierten Seite der Platine 10 angeordnet, da an dieser Stelle die größte Temperaturbelastung zu erwarten ist.

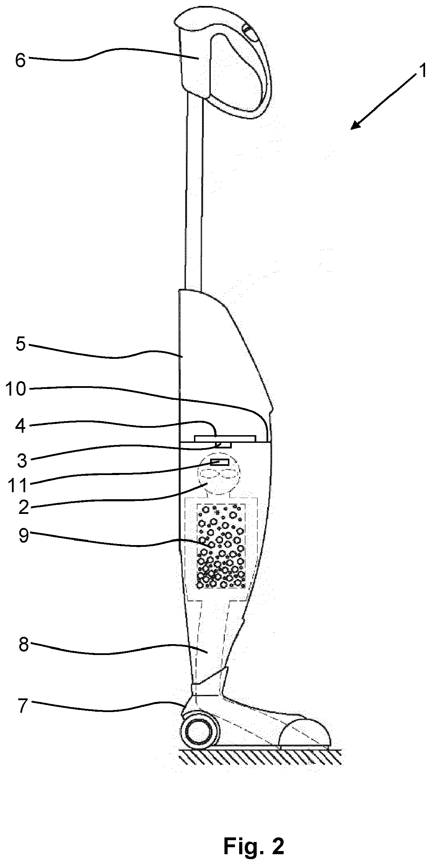

Fig. 2 zeigt ein weiteres Ausführungsbeispiel eines Sauggerätes 1 mit mindestens einem Gebläse 2 mit einem Motor, mindestens einem Temperatursensor 3 und einer Steuereinrichtung 4. Das Sauggerät 1 weist ein Gehäuse 5 auf. An dem Gehäuse 5 ist ein Handgriff 6 angeordnet, mit dem der Staubsauger von einem Benutzer geführt und bedient werden kann. Das Gebläse 2 mit dem Motor ist innerhalb des Gehäuses 5 derart angeordnet, dass ausgehend von einem Vorsatzgerät 7, das hier als Bodendüse ausgebildet ist, in einem Saugkanal 8 ein Saugluftstrom erzeugbar ist. Der Saugluftstrom wird von einer Filtereinheit 9 von Sauggut befreit. Die Steuereinrichtung 4 ist zusammen mit dem Temperatursensor 3 auf einer Platine 10 angeordnet.

Fig. 2 zeigt ferner einen zweiten Temperatursensor 11, der an einem Motorlager des Motors des Gebläses 2 angeordnet ist. Das Drosseln oder Steigern mindestens eines Betriebsparameters des Motors erfolgt vorzugsweise in Abhängigkeit von dem Temperaturmesswert des Temperatursensors 3,11, der von den beiden Temperatursensoren 3, 11 die höhere Temperatur erfasst.

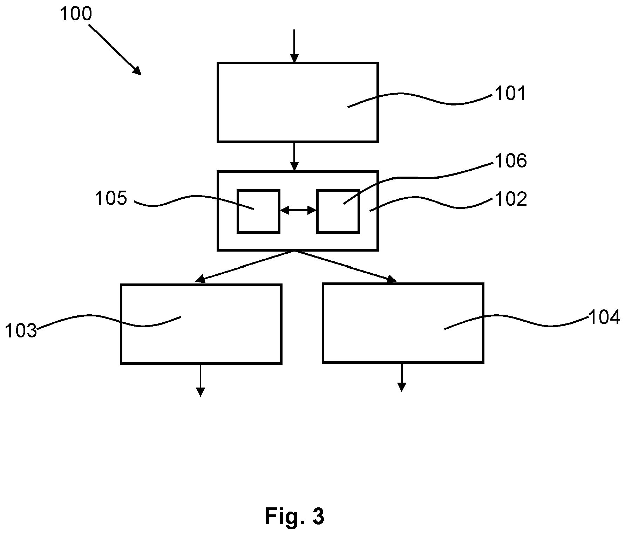

Fig. 3 zeigt ein Ausführungsbeispiel eines schematischen Ablaufs eines erfindungsgemäßen Verfahrens 100. Das Verfahren ist zum Betrieb eines Sauggerätes 1 mit mindestens einem Gebläse 2 mit einem Motor, mindestens einem Temperatursensor 3 und mindestens einer Steuereinrichtung 4 ausgebildet. Zunächst erfolgt das Messen 101 mindestens eines Temperaturmesswertes 105 mit dem Temperatursensor 3. Nachfolgend erfolgt ein Abgleichen 102 des gemessenen Temperaturmesswertes 105 mit mindestens einem Temperaturschwellenwert 106. Nachfolgend erfolgt das Drosseln 103 oder Steigern 104 mindestens eines Betriebsparameters, beispielsweise der Drehzahl, der Leistung und/oder des Drehmoments, in Abhängigkeit von dem Ergebnis des Abgleichens 102. Wird beispielsweise ein vorbestimmter Temperaturschwellenwert 106 überschritten, erfolgt vorzugsweise ein Drosseln 103, wird ein vorbestimmter Temperaturschwellenwert 106 unterschritten, erfolgt vorzugsweise ein Steigern 104. Das Steigern 104 erfolgt maximal bis zu dem Betriebsparameter bzw. zu den Betriebsparametern, die vorzugsweise von einem Benutzer in Form einer Saugleistungsstufe gewählt worden sind.

Erfindungsgemäß ist auch vorgesehen, dass das Abgleichen 102 mit einer Vielzahl von Temperaturschwellenwerten 106 oder Temperaturschwellenwertbereichen erfolgt. Vorzugsweise wird das Verfahren kontinuierlich wiederholt, um eine stetige Anpassung der Betriebsparameter an die Temperatur am Temperatursensor 3 zu gewährleisten.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Sauggerät
- 2: Gebläse
- 3: Temperatursensor
- 4: Steuereinrichtung
- 5: Gehäuse
- 6: Handgriff
- 7: Vorsatzgerät
- 8: Saugkanal
- 9: Filtereinheit
- 10: Platine
- 11: Zweiter Temperatursensor

- 100: Verfahren
- 101: Messen
- 102: Abgleichen
- 103: Drosseln
- 104: Steigern
- 105: Temperaturmesswert
- 106: Temperaturschwellenwert

## Patentansprüche

**1.** Sauggerät (1) mit mindestens einem Gebläse (2) mit einem Motor, mindestens einem Temperatursensor (3) und mindestens einer Steuereinrichtung (4),
**dadurch gekennzeichnet, dass**
die Steuereinrichtung (4) derart ausgebildet und eingerichtet ist, mindestens einen Betriebsparameter des Motors in Abhängigkeit von einem Abgleich eines Temperaturmesswertes des Temperatursensors (3) mit mindestens einem Temperaturschwellenwert zumindest zeitweise zu drosseln oder zu steigern.

**3.** Sauggerät (1) nach Anspruch 1 oder 2,
**dadurch gekennzeichnet, dass**
der mindestens eine Betriebsparameter gedrosselt wird, wenn ein erster Temperaturschwellenwert erreicht oder überschritten wird und/oder dass der mindestens eine Betriebsparameter gesteigert wird, wenn ein zweiter Temperaturschwellenwert erreicht oder unterschritten wird.

**4.** Sauggerät (1) nach einem der Ansprüche 1 bis 3,
**dadurch gekennzeichnet, dass**
das Drosseln oder Steigern des mindestens einen Betriebsparameters stufenweise oder stufenlos erfolgt.

**5.** Sauggerät (1) nach einem der Ansprüche 1 bis 4,
**dadurch gekennzeichnet, dass**
mindestens ein Grad der Abweichung des Temperaturmesswertes von mindestens einem Temperaturschwellenwert bestimmt wird, und dass unter Verwendung des Grades der Abweichung ein Grad des Drosselns oder Steigerns bestimmt und angewendet wird.

**6.** Sauggerät (1) nach einem der Ansprüche 1 bis 5,
**dadurch gekennzeichnet, dass**
ein erfolgtes Drosseln oder Steigern eines Betriebsparameters so lange gehalten wird, bis mindestens ein Temperaturschwellenwert erreicht, unter- oder überschritten wird.

**7.** Sauggerät (1) nach einem der Ansprüche 1 bis 6,
**dadurch gekennzeichnet, dass**
eine Mehrzahl von Temperaturschwellenwertbereichen definiert sind, dass jedem Temperaturschwellenwertbereich mindestens ein Betriebsparameter zugeordnet ist, dass mindestens ein Temperaturmesswert des Temperatursensors mit den Temperaturschwellenwertbereichen abgeglichen und der Temperaturmesswert einem Temperaturschwellenwertbereich zugeordnet wird, und dass der dem Temperaturschwellenwertbereich zugeordnete Betriebsparameter als maximaler Betriebsparameter für den Betrieb des Motors festgelegt wird.

**8.** Sauggerät (1) nach einem der Ansprüche 1 bis 7,
**dadurch gekennzeichnet, dass**
bei Überschreiten eines maximalen Temperaturschwellenwertes ein Abschalten des Motors von der Steuereinrichtung (4) bewirkt wird.

**9.** Sauggerät (1) nach einem der Ansprüche 1 bis 8,
**dadurch gekennzeichnet, dass**
mindestens ein zweiter Temperatursensor (11) vorhanden ist, und dass das Drosseln oder Steigern in Abhängigkeit von dem höheren Temperaturmesswert der beiden Temperatursensoren (3,11) erfolgt.

**10.** Sauggerät (1) nach einem der Ansprüche 1 bis 9,
**dadurch gekennzeichnet, dass**
bei jedem Einschalten des Sauggerätes (1) mindestens ein Temperaturmesswert ermittelt wird, und dass unmittelbar nach dem Einschalten ein Drosseln oder Steigern erfolgt.

**11.** Verfahren (100) zum Betrieb eines Sauggerätes (1) mit mindestens einem Gebläse (2) mit einem Motor, mindestens einem Temperatursensor (3) und mindestens einer Steuereinrichtung (4), umfassend mindestens die folgenden Verfahrensschritte:
- Messen (101) mindestens eines Temperaturmesswertes mit dem Temperatursensor (3),
- Abgleichen (102) des Temperaturmesswertes mit mindestens einem Temperaturschwellenwert,
- Drosseln (103) oder Steigern (104) mindestens eines Betriebsparameters des Motors in Abhängigkeit von dem Ergebnis des Abgleichens (102).

**12.** Verfahren (100) nach Anspruch 11,
**dadurch gekennzeichnet, dass**
ein Abgleichen (102) des Temperaturmesswertes mit einer Vielzahl von Temperaturschwellenwerten erfolgt, dass jedem Temperaturschwellenwert mindestens ein, insbesondere maximaler, Betriebsparameter zugeordnet ist, und dass der auf Basis des Abgleichens (102) ermittelte Betriebsparameter als maximaler Betriebsparameter für den Betrieb festgelegt wird.

**13.** Verfahren (100) nach einem der Ansprüche 11 oder 12,
**dadurch gekennzeichnet, dass**
eine Mehrzahl von Temperaturschwellenwertbereichen definiert sind, dass jedem Temperaturschwellenwertbereich mindestens ein Betriebsparameter zugeordnet ist, dass das Abgleichen (102) des mindestens einen Temperaturmesswertes des Temperatursensors mit den Temperaturschwellenwertbereichen und ein Zuordnen des Temperaturmesswerts zu einem Temperaturschwellenwertbereich erfolgt, und dass ein Festlegen des dem Temperaturschwellenwertbereich zugeordneten Betriebsparameters als maximaler Betriebsparameter für den Betrieb erfolgt.

**14.** Verfahren (100) nach einem der Ansprüche 11 bis 13,
**dadurch gekennzeichnet, dass**
das Messen (101) eines Temperaturmesswerts zumindest unmittelbar nach dem Einschalten des Sauggerätes (1) erfolgt, so dass der Betrieb erforderlichenfalls mit mindestens einem gedrosselten oder gesteigerten Betriebsparameter erfolgt.

**15.** Computerprogrammprodukt, das Anweisungen enthält, um die Steuereinrichtung (4) eines Sauggerätes (1) zu veranlassen, ein Verfahren (100) nach einem der Ansprüche 11 bis 14 auszuführen.
